# EUROPEAN PATENT APPLICATION

(11) **EP 3 287 962 A1**
(43) Date of publication of application: **28.02.2018**
(21) Application number: 16782443.2
(22) Date of filing: 21.04.2016
(51) Int. Cl.: G06Q 10/00

(54) **SYSTEM AND METHOD FOR RESERVING PARKING SPACE IN REAL TIME**

(30) Priority: 24.04.2015 CL 20151087
(71) Applicant: Empresas Disruptiva SPA, Santiago de Chile (CL)
(72) Inventor: GALANO TRIVIÑO, Sergio Enrique, Comuna Calera de Tango Santiago de Chile (CL); SANHUEZA PEREZ, Darío Alejandro, Santiago de Chile (CL)
(74) Representative: Padial Martinez, Ana Belen
(86) International application number: PCT/CL2016/050019
(87) International publication number: WO 2016/168948

(57) **Abstract**

The present invention is related to the field of telecommunications and, particularly, provides a system for reserving parking space in real time, whose novelty lies on the fact that it comprises means for dynamical and real time reallocating of the parking space. The invention also comprises a process for reserving a parking space using said system. The system for reserving parking space in real time of the present invention comprises communication means for communication with a central server, reservation means for requesting a reservation to said central server; an electronic database containing information about parking spaces, which is read and updated by said central server; positioning means for determining the position of a vehicle, for which the parking space is reserved and communicating said position to the central server; and a central server configured to perform the steps of: communicating with said communication means, receiving reservation requests from said reservation means, processing said reservation requests and reserving a parking space, communicating with said positioning means; classifying the parking space according to a feature defined by the interested party and reallocating a parking space from a reservation already generated according to said defined feature.

## Description

### TECHNICAL FIELD OF THE INVENTION

The present invention is related to the field of telecommunication and, particularly, provides a system for reserving parking space in real time, whose novelty lies on the fact that it comprises means for reallocating the parking spaces. The invention also comprises a process for reserving parking spaces using said system.

### BACKGROUND OF THE INVENTION

Looking for a parking space causes disadvantages for the drivers due to the time spent locating a place for parking, in particular during rush hour. This problem also affects the parking-lot administrators, since it causes non-optimal use of the lot capacity by increasing the driving time of the vehicles inside said parking lot.

In this sense, systems for reserving a parking space under different conditions have been developed. For example, the patent US 7,825,827 describes a system for locating and reserving a parking space near a specific destination. In said document, each parking space has occupation sensors that allow defining which of said parking spaces is occupied and which is unoccupied. The described system also allows the navigation from a starting location to the reserved parking space through the communication established with the user of said parking space using a mobile device.

On the other hand, the patent US 8,791,838 describes another system for locating parking spaces near a specific destination. In said system, a list of parking spaces is proposed to the user, and the order thereof is based on parameters defined by the user such as cost, distance to the destination, or other special features of the parking space as well as environmental parameters such as weather or the time of the day. The user can select and, optionally, reserve one of said parking spaces proposed and the system generates a route to the parking space based on this selection.

The documents US 20140089015, US 8,671,002; US 8,751,271 and US 8,671,014 describe different systems and methods for generating parking space reservations. The first document is related to reservations for delivery vehicles, wherein both the arrival time to the parking lot and the occupation time of the parking space are precisely known. The second document is related to a reservation system focused on commercial customers, which allows making certain promotions related to the store visited by the user of the parking space. The third case is related to vehicles for loading or unloading, wherein the reservations are made by the company that owns said vehicle. The last document is related to residential parking spaces, characterized in that said parking spaces are used for long times in fixed hours of the day. In all of the previous cases, the identification of the user is made by sensors located at the parking space to be used.

However, all the previous reservation systems provide a static reservation of the parking space, namely, once the parking space is reserved, it is not possible to modify said reservation in real time. Thus, if during the time elapsing between the moment at which the reservation is made and the parking space is really used, a parking space becomes clear -which satisfies the user's requirements better, it is not possible to reallocate this clear parking space. This causes inefficiencies, for example, by increasing the traffic time for both vehicles and pedestrians inside the parking lot.

### SUMMARY OF THE INVENTION

The present invention provides a system for reserving parking space in real time, characterized in that it comprises means for communicating with a central server; reservation means for making reservation requests to said central server; an electronic database containing information about parking spaces which may be accessed and updated by the central server; means for determining the position of a vehicle for which a parking space is reserved and communicating said position to the central server; and a central server configured to perform the following tasks:
a) communicating with said communication means, receiving reservation requests from said reservation means, processing said reservation requests and reserving a parking space, communicating with said means for determining the position of the vehicle;
b) classifying the parking spaces according to a feature defined by an interested party; and
c) reallocating a parking space from a reservation already generated according to the features defined by an interested party.

In a preferred embodiment of the invention, said central server is additionally configured to define a parking space which is the best available option according to said feature defined by an interested party.

In another preferred embodiment of the invention, the system for reserving parking space in real time is characterized in that one of the components of said means for determining the position of said vehicle and one of the components of said means for establishing communication with said central server are in a mobile communication device.

In an additional embodiment, said central server is additionally configured to define an estimated arrival time to a destination of a vehicle, for which the parking space is reserved.

In another embodiment of the invention, the system for reserving parking space in real time further comprises means for allowing or limiting the occupation of a parking space. Said means are controlled by the central server. Said means can comprise a barrier, which is taken from the group consisted of physical and logical barriers, as well as combinations thereof.

The system for reserving parking space in real time is characterized in that said electronic database further contains information about the best option preferences of the interested party.

In a preferred embodiment of the invention, the means for determining the position of a vehicle, for which a parking space is reserved, corresponds to the Global Positioning System (GPS). In another preferred embodiment of the invention, said means is the Wi-Fi Positioning System (WPS)

In another preferred embodiment of the invention, the system additionally comprises occupation sensors of the parking spaces, which communicate this information to the central server.

The present invention also provides a method for reserving a parking space in real time comprising four main steps:
a) receiving a reservation request for a parking space from an interested party in a central server;
b) classifying a plurality of parking spaces according to a feature defined by an interested party in a central server;
c) reserving a parking space which is the best available option according to said feature defined by the interested party; and
d) communicating the reservation of said parking space to said interested party.

In a preferred embodiment of the present invention, the process for reserving parking spaces in real time further comprises the following steps:
a) waiting a defined period of time of time, once the reservation of the parking space is made;
b) reclassifying said plurality of parking spaces according to said featured defined by the interested party in said central server;
c) selecting a second parking space, which is the best available option according to said feature defined by the interested party in said central server;
d) comparing said second parking spaces selected to the parking space reserved in said central server;
e) reserving the parking space which is the best resulting option of said comparison; and
f) communicating to the interested party said reallocation of the parking space.

In a preferred embodiment, the process is characterized by the additional steps of waiting a defined period of time and reclassifying said plurality of parking spaces are done in an iterative way before determining the second parking space which is the best available option of said classification.

In a further preferred embodiment, the process is characterized in that said iteration is stopped when the classification according to said feature defined by the interested party is modified in relation to the previous classification. In a still another preferred embodiment, the process is characterized in that said iteration is stopped in an estimated arrival time of a vehicle, for which the parking space is reserved.

In a yet another preferred invention, the process for reserving parking spaces in real time is characterized in that said additional steps of waiting a defined period, reclassifying the plurality of parking spaces, selecting a second parking space, comparing said second parking space to the reserved parking space and reserving the parking space, which is the best option resulting from said comparison are performed in an iterative way before communicating said reallocation to the interested party. Said iteration is stopped at the estimated arrival time of a vehicle, for which the parking space is reserved.

In an additional embodiment of the invention, the process is characterized in that said feature defined by the interested party is stored in a database. In another preferred embodiment, the process is characterized in that said feature defined by the interested party is communicated to said central server by appropriate communication means. Said appropriate means can comprise a mobile communication device.

In one of the preferred embodiments of the invention, the process for reserving parking spaces in real time is characterized in that the defined period of time is previously defined in said central server. In another of said preferred embodiments, said defined period of time is the time difference between the reservation time and the estimated arrival time of the vehicle, for which the parking space is reserved.

In a still further preferred embodiment, said estimated arrival time is calculated in said central server based on the position of said vehicle, which is sent to the central server by appropriate means.

In an embodiment of the invention, the process is characterized in that said appropriate means for sending the position of said vehicle to the central server corresponds to the Global Positioning System (GPS). In another embodiment, the process is characterized in that said appropriate means is the Wi-Fi Positioning System (WPS).

In another further preferred embodiment, the estimated arrival time to the destination of said vehicle is communicated to said central server by appropriate communication means. Said appropriate communication means can comprise a mobile communication device.

In a preferred embodiment of the invention, the process for reserving parking spaces in real time is characterized in that it further comprises the step of limiting the occupation of said reserved parking space using appropriate means for allowing, in the case of a clear parking space, or restricting, in the case of a reserved parking space, the occupation of said parking space. Said means for allowing or limiting the occupation o may be controlled by the central server. Said means may for allowing or limitig the occupation of the parking space comprise a barrier selected from the group consisted of physical barriers and logical barriers, as well as combinations thereof.

### BRIEF DESCRIPTION OF THE DRAWINGS

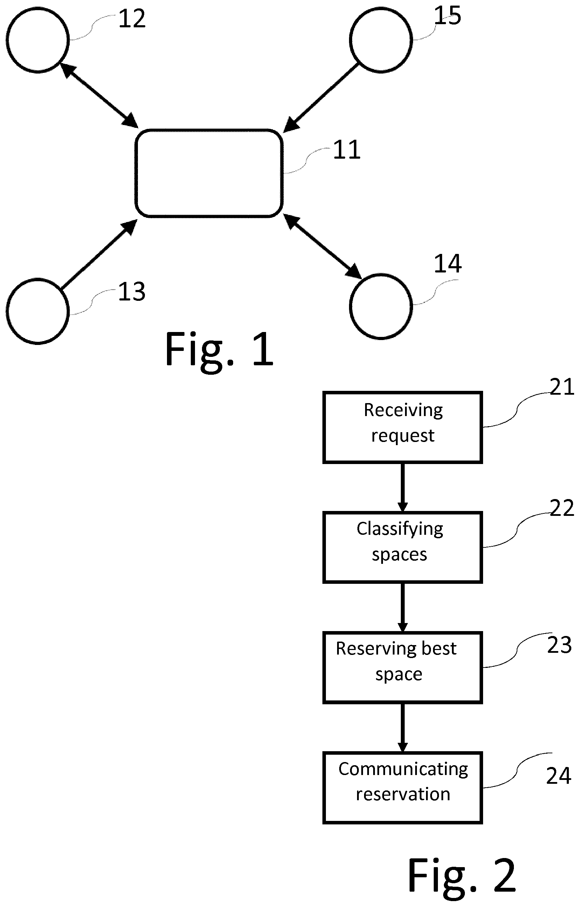

Figure 1 shows the system for reserving parking spaces in real time.
Figure 2 shows the method for reserving parking space in real time.

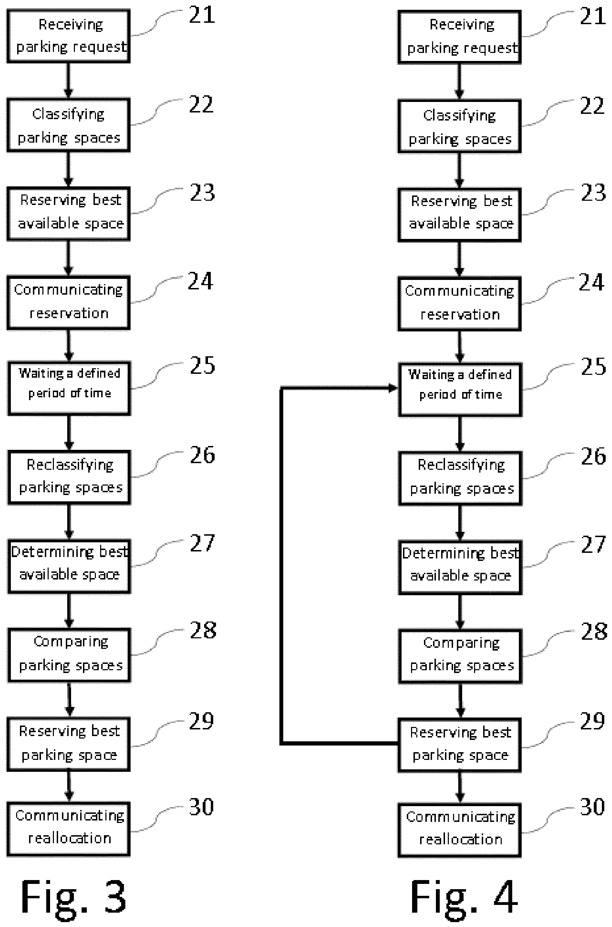

Figure 3 shows the method for reserving parking space in real time with reallocation.
Figure 4 shows the method for reserving parking space in real time with steps of reallocation and iteration.

### DETAILED DESCRIPTION OF THE INVENTION

A detailed embodiment of the present invention is explained hereunder.

The system for reserving parking space in real time system of the present invention is divided into several components necessary to perform the methods that optimize the parking space reservation. A parking space is to be understood as the space available for the occupation of a vehicle during its stay in said place, which can or cannot be defined by visible signs. An example of parking spaces not defined by visible signs is the spaces used at the side of the roads. On the other hand, an example of parking spaces defined by visible signs is those in parking lots of commercial centers. Nevertheless, the scope of the present invention is not limited by the fact of the parking space being a defined or not defined parking space. Similarly, the scope of the present invention is not limited by the physical place, where said parking spaces are.

It is to be understood that when "a parking space" is mentioned in this description, one or more parking spaces are being referred to. The use of the singular term is meant to provide a better understanding of the invention but not to limit the scope of the same. In the same way, when "the parking space" is mentioned in this description, it means the parking space or spaces, where the use of the singular term is meant to provide a better understanding of the invention but not to limit the scope thereof.

The system for reserving parking space in real time of this invention is based on a method that performs a series of different steps or stages. In each of said steps, means configured to perform the function to achieve the expected results are included.

The first step needed for the operation of the system is the reception of a request for reserving a parking space (21) in a central server (11). Said reservation request is generated by an interested party by appropriate reservation means (13) to make said reservation request.

It is to be understood that an interested party may be any person or institution that requires reserving a parking space. Said parking space may be used by the interested party or by another person. An interested party may be, without limiting the scope of the invention, the driver of a vehicle that requires a parking space, a business or store that requires a parking space for a customer, a company that requires a parking space for a visitor. However, a person of ordinary skill in the art will understand that the nature of the interested party does not limit the scope of the present invention.

The reservation request has an associated feature, which is defined by said interested party and allows classifying a plurality of parking spaces according to it.

As with the case of parking spaces, is to be understood that when "a feature" is mentioned in this description, it means one or more features and when "the feature" is mentioned, it means "the feature or features" and in both cases the singular expression is used just to provide a better understanding of the invention, but is not meant to limit the scope of the same.

This feature may be, without limiting to these, the occupation or inoccupation of a parking space, the distance from the parking space to a destination of the vehicle, the cost of the parking space, the presence or not of plugs for electric cars, a feature like being a parking space for pregnant women or people with disabilities, among others. However, a person of ordinary skill in the art will understand that any feature that allows classifying a plurality of parking spaces may be defined by the interested party without limiting the scope of the present invention.

In the next step of the process, the central server using said feature defined by the interested party, classifies a plurality of parking spaces (22) according to said feature. To perform said classification, the central server (11) reads an electronic database (14) containing the information about the plurality of parking spaces.

The feature defined by the interested party may be communicated to the central server by appropriate communication means (12) to establish said communication such as, without being limited to it, a mobile device with an internet connection.

Another way in that the central server (11) may obtain said feature defined by the interested party is to read the information about said interested party in the electronic database (14) which, in this case, stores the feature defined by the interested party. In a third case, the central server (11) may use a combination of both of the previously described ways that allows the central server (11) to update the information about the interested party in said electronic database (14). However, it is to be understood that the way in which the central server (11) obtains said feature defined by the interested party does not limit the scope of this invention.

The central server (11) is further configured to determine a parking space, which is the best available option according to said feature defined by the interested party. It is to be understood that the best available option is the parking space, which satisfies said feature for said interested party in the best way.

In order to provide a better understanding of which is the best available option, specific examples of this quality are indicated hereunder. It is to be understood, however, that said examples are illustrative only and they do not limit the scope of the present invention.

In a first example, the interested party may define, as a feature for carrying out said classification, the distance from the parking space to the destination of a vehicle. In this case, the best available option is the parking space, which minimizes or shortens said distance.

In another example, said feature defined by the interested party is the cost of the parking space, being the best available option the parking space that has the lowest cost.

In a third example, the feature defined by the interested party may be the illumination of the parking space, being the best available option the parking space that has the maximum illumination. Another example may include the fact of being an indoor parking space. A person of ordinary skill in the art will understand that each feature defined by the interested party has an associated parking space, which is the best available option.

In particular, a significant feature defined by the interested party is the occupation state of the parking space. In this case, the best available option is a clear or free parking space. A way for determining the occupation state of a parking space is by means of occupation sensors that communicate said information to the central server (11), which updates that information in the electronic database (14).

Once the parking space, which is the best available parking space, has been defined, the next step performed by the central server (11) is the reservation (23) of said parking space, updating the occupation state of said reserved parking space in the electronic database (14) and then communicating (24) said reservation to the interested party or to the user of a vehicle, for which the parking space is reserved by appropriate communication means (12).

Additionally, the central server (11) is configured to reallocate a parking space from a reservation already generated based on the feature defined by the interested party. To complete said reallocation, the central server (11) executes the following steps:
In first place, a defined period of time is waited (25) from the moment the reservation of the parking space is made. This defined period of time may be a period previously programmed in the central server (11) or may be calculated by the central server (11) as a function of an estimated arrival time of the vehicle, for which the parking space is reserved. In this second case, the central server (11) is configured to define said estimated arrival time.

It is to be understood that the estimated arrival time is the time at that said vehicle, for which the parking space is reserved, is expected to arrive to the destination to which it goes.

The estimated arrival time may be communicated to the central server (11) by appropriate communication means (12) which may comprise, without being limited to it, a mobile communication device.

On the other hand, the arrival time may be calculated by the central server (11) based on the position of said vehicle. To do this, the system includes means (15) for determining the position of said vehicle that communicate said position to the central server (11).

These means (15) may be the Global Positioning System (GPS) in case that the vehicle travels outdoors or the Wi-Fi Positioning System (WPS) in case that the vehicle travels indoors. A person of ordinary skill in the art will understand, however, that said means (15) means for determining the position of said vehicle may be exchanged for others having the same functionality without limiting the scope of the present invention.

In some cases, the receiver of said positioning means (15) and the communication means (12) may be integrated in a single mobile communication device. This is the case in which a smartphone is used to perform both tasks.

In the case that the central server (11) is configured to define an estimated arrival time, the defined period of time elapsing from the reservation moment may be the time difference between the moment of the reservation and said estimated arrival time such that the reallocation begins at the moment previous to the expected arrival moment of the vehicle to the destination. The way in which said defined period of time from the reservation time is determined does not limit the scope of the present invention. Other ways of defining said period may exist without limiting the scope of the present invention.

The next step in the process of reallocation consists in that the central server (11) reclassifies (26) the plurality of parking spaces according to the feature defined by the interested party. To carry out this reclassification, the central server (11) reads the electronic database (14) one more time, which could have been updated during said defined period. As in the previous classification step, the way in that the central server (11) collects said feature does not limit the scope of the present invention.

Once the reclassification is carried out, the central server (11) determines (27) a second parking space, which is the best available option of the second classification according to the feature defined by the interested party.

After determining (27) said second parking space, the central server (11) compares (28) that second parking space to the reserved parking space, and determines the best available option between both parking spaces.

Once the best available option between both parking spaces is determined, the central server (11) reserves said best space resulting from the comparison, updates that information in the electronic database (14) and communicates (30) this reallocation to the interested party, to the user, or both by the appropriate communication means (12).

In some cases, the process considers that the central server (11) executes the steps of waiting (25) a defined period of time from the reservation time, reclassifying (26) the plurality of parking spaces according to the feature defined by the interested party, determining (27) a second parking space, which is the best available option according to said feature, comparing (28) the reserved parking space to that second parking space, and, finally, reserving (29) the parking space which is the best available option, between both parking spaces in an iterative way before to communicate (30) said reallocation to the interested party, to the user or both. This last case is the case in which the reallocation is not communicated to the interested party, to the user, or both, unless there is a change of the reserved parking space or, in the case that change is not made, the reservation of the initially reserved parking space is communicated as a way of confirmation. The iteration may be stopped in the estimated arrival time of the vehicle, for which the parking space is reserved in case that the central server (11) is configured to define said estimated arrival time. In other cases, the interested party may further define a stopping time of the iteration. Nevertheless, the way in which said stopping time of the iteration is defined does not limit the scope of the present invention.

In other cases, the central server (11) may execute the steps of waiting (25) a defined period of time from the reservation time and classifying (26) the plurality of parking spaces according to the feature defined by the interested party in an iterative way before determining (27) the second parking space, which is the best available option according to said feature. This is the case, in which the central server (11) does not determine said parking space, unless there is a change in the classification of the parking spaces compared to the previous classification, i.e., unless there is a change of state of at least one of the parking spaces according to the wanted feature. If this change does not occur, the iteration is stopped at the estimated arrival time of the vehicle, for which the parking space is reserved. A case, in which the classification changes, is when the defined feature is the occupation and reservation state of the parking spaces, where a parking space might become unoccupied while the reallocation process is running. Another case is when the defined feature is the cost of the parking space and said cost is dynamical during the day. However, the reason that causes the change in the classification of the parking spaces does not limit the scope of the present invention.

Additionally, the system and process of the present invention consider limiting the occupation of said reserved parking space in order to avoid the non-authorized use of the same, using appropriate means. Said means may or may not be controlled by the central server and may have associated a barrier selected from the group consisted of physical barriers and logical barriers, as well as combinations thereof. Nevertheless, the nature of those means for limiting the occupation of said reserved parking space does not limit the scope of the present invention.

A physical barrier is to be understood as a barrier that prevents in an effective way the non-authorized occupation of the parking space such as, without being limited to it, barriers that are raised or lowered according to the parking space availability. On the other hand, a logical barrier is to be understood to those limited to indicate the availability of a parking space or to act in answer to a non-authorized occupation of the parking space, but without limiting in an effective way the occupation of said parking space. Examples of logical barriers are, without being limited to those, lights that go on or off, or lights of different colors

With the previously described parking space reservation system and process of the present invention, it is assured that every reservation request always gets the best available parking space according to the defined feature, solving the problem of having a real time and dynamical reallocation of the parking spaces, optimizing even further the use of the same.

## Claims

1. A system for reserving parking space in real time **characterized in that** it comprises:
means (12) for communicating with a central server (11);
reservation means for requesting a parking reservation (13) to said central server (11);
an electronic database (14) containing information about parking spaces, which is read and updated by said central server (11);
means (15) means for determining the position of a vehicle for which a parking space is reserved, and for communicating said position to said central server (11); and
a central server (11) configured to:
a) communicating with said communication means, receiving reservation requests from said reservation means, processing said reservation requests and reserving a parking space, and for communicating with said means for determining the position of the vehicle;
b) classifying the parking spaces according to a feature defined by the interested party;
c) determining a parking space, which is the best available option according to said defined feature; and
d) reallocating a parking space from a reservation already generated according to the defined feature,
wherein said reallocation comprises the following steps:
i. waiting a defined period of time (25) once the reservation is made; ii reclassifying said plurality of parking spaces according to said feature defined by the interested party (26) in said central server (11);
ii. determining a second parking space, which is the best available option according to said feature defined by the interested party (27) in said central server (11);
iii. comparing said selected second parking space to the reserved parking space (28) in said central server (11), and
iv. reserving the parking space, which is the best available option resulting from said comparison (29).

2. The system for reserving parking space in real time of claim 1, **characterized in that** one of the components of said means (15) for determining the position of the vehicle and one of the components of said means (12) for communicating with a central server (12) are in a mobile communication device.

3. The system for real time parking space of claim 1, **characterized in that** said central server (11) is further configured to define an estimated arrival time to a destination of said vehicle, for which the parking space is reserved.

4. The system for reserving parking space in real time of claim 1, **characterized in that** it further comprises means for allowing or limiting the occupation of a parking space.

5. The system for reserving parking space in real time of claim 4, **characterized in that** said means for allowing or limiting the occupation of the parking space are controlled by the central server (11).

6. The system for reserving parking space in real time of claim 4, wherein said means for allowing or limiting the occupation of the parking space comprise a barrier taken of the group consisted of physical barriers and logical barriers, as well as combinations thereof.

7. The system for reserving parking space in real time of claim 1, **characterized in that** said electronic database (14) further stores information about the best option preference of the interested party.

8. The system for reserving parking space in real time of claim 1, **characterized in that** said means (15) for determining the position of the vehicle is the Global Positioning System.

9. The system for reserving parking space in real time of claim 1, **characterized in that** said means (15) for determining the position of the vehicle is the Wi-Fi Positioning System.

10. The system for reserving parking space in real time of claim 1, **characterized in that** it further comprises occupation sensors of the parking spaces that communicate said occupation to the central server (11).

11. A method for reserving parking space in real time, **characterized in that** it comprises the steps of:
a) receiving a parking space reservation request from an interested party (21) in a central server (11);
b) classifying a plurality of parking spaces according to a feature defined by the interested party (22) in a central server (11);
c) reserving a parking space, which is the best available option, according to said feature defined by the interested party (23);
d) reallocating a parking space from a reservation already generated according to the defined feature,
wherein said reallocation comprises the steps of:
i. waiting a defined period of time (25) once the reservation of the parking space is made,
ii. reclassifying said plurality of parking spaces according to said feature defined by the interested party (26) in said central server (11);
iii. determining a second parking space, which is the best available option according to said feature defined by the interested party (27) in said central server (11);
iv. comparing said second selected parking space to the reserved parking space (28) in said central server (11); and
v. reserving the parking space, which is the best available option resulting from said comparison (29).

12. The method for reserving parking space in real time of claim 11, **characterized in that** it further comprises the step of communicating said reservation of the parking space, which is the best available option according to said feature defined by the interested party (23).

13. The method for reserving parking space in real time of claim 11 or 12, **characterized in that** it further comprises the step of communicating said reallocation of the previously reserved parking space (30).

14. The method for reserving parking space in real time of claim 11, **characterized in that** the steps i and ii are executed in an iterative way previous to determine the second parking space.

15. The method for reserving parking space in real time of claim 14, **characterized in that** said iteration is stopped when there is a change in the classification according to said feature defined by the interested party compared to the previous classification.

16. The method for reserving parking space in real time of claim 13, **characterized in that** the steps i, ii, iii and iv are executed in an iterative way previous to the step of communicating said reallocation of the previously reserved parking space (30).

17. The method for reserving parking space in real time of claim 14 or 16, **characterized in that** said iteration is stopped at an estimated arrival time of a vehicle, for which the parking space is reserved.

18. The method for reserving parking space in real time of claim 11, **characterized in that** said feature defined by the interested party is stored in an electronic database (14).

19. The method for reserving parking space in real time of claim 11, **characterized in that** said feature defined by the interested party is communicated to the central server (11) by appropriate means (12).

20. The method for reserving parking space in real time of claim 19, **characterized in that** said appropriate means (12) comprises a mobile communication device.

21. The method for reserving parking space in real time of claim 11, **characterized in that** said defined period of time is previously defined in said central server (11).

22. The method for reserving parking space in real time of claim 11, **characterized in that** said defined period of time is the time difference between the reservation time and the estimated arrival time of the vehicle, for which the parking space is reserved.

23. The method for reserving parking space in real time of claim 17 or 22, **characterized in that** said estimated arrival time is calculated in said central server (11) based on the position of a vehicle, sent to the central server by appropriate means (15).

24. The method for reserving parking space in real time of claim 23, **characterized in that** said appropriate means (15) for determining the position of the vehicle is the Global Positioning System.

25. The method for reserving parking space in real time of claim 23, **characterized in that** said appropriate means (15) for determining the position of the vehicle is the Wi-Fi Positioning System.

26. The method for reserving parking space in real time of claim 17 or 22, **characterized in that** said estimated arrival time is communicated to said central server (11) by appropriate means (12).

27. The methods for reserving parking space in real time of claim 26, **characterized in that** said appropriate means (12) comprises a mobile communication device.

28. The method for reserving parking space in real time of claim 11, **characterized in that** it further comprises the step of limiting the occupation of a reserved parking space by appropriate means for allowing or limiting said occupation.

29. The method for reserving parking space in real time of claim 28, **characterized in that** said means for allowing or limiting the occupation of the parking space are controlled by the central server (11).

30. The method for reserving parking space in real time of claim 28, **characterized in that** said means for allowing or limiting the occupation of the parking space comprise a barrier taken from the group consisted of physical barriers and logical barriers as well as combinations thereof.
